# EUROPEAN PATENT SPECIFICATION

(11) **EP 3 541 648 B1**
(45) Date of publication and mention of the grant of the patent: **22.09.2021**
(21) Application number: 17871104.0
(22) Date of filing: 11.10.2017
(51) Int. Cl.: B60K 15/035, F02M 21/02, F16K 17/00, F16K 37/00, F17C 13/02

(54) **A METHOD AND SYSTEM FOR DIAGNOSING AT LEAST ONE PRESSURE RELIEF VALVE OF A LIQUEFIED GAS FUEL SYSTEM FOR A VEHICLE**
VERFAHREN UND SYSTEM ZUR DIAGNOSE VON MINDESTENS EINEM DRUCKENTLASTUNGSVENTIL EINES FLÜSSIGGASKRAFTSTOFFSYSTEMS FÜR EIN FAHRZEUG
PROCÉDÉ ET SYSTÈME DE DIAGNOSTIC D'AU MOINS UNE SOUPAPE DE SURPRESSION D'UN SYSTÈME DE CARBURANT GAZEUX LIQUÉFIÉ POUR UN VÉHICULE

(30) Priority: 15.11.2016 SE 1651490
(43) Date of publication of application: 25.09.2019
(73) Proprietor: Scania CV AB, 151 87 Södertälje (SE)
(72) Inventor: GRALDE, Marcus, 117 65 Stockholm (SE); FORSLUND, Anders, 647 31 Mariefred (SE)
(74) Representative: Scania CV AB
(86) International application number: PCT/SE2017/050996
(87) International publication number: WO 2018/093307

(56) References cited:
- EP-A1- 0 028 661
- EP-A2- 0 745 499
- WO-A1-2012/075588
- WO-A2-2015/195001
- DE-A1-102012 014 984
- US-A- 2 952 151
- US-A- 4 548 067
- US-A- 4 761 999
- US-A1- 2005 039 799

## Description

### TECHNICAL FIELD

The invention relates to method for diagnosing at least one pressure relief valve of a liquefied gas fuel system for a vehicle according to the preamble of claim 1. The invention also relates to system for diagnosing at least one pressure relief valve of a liquefied gas fuel system for a vehicle. The invention also relates to a vehicle.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degrees at 10 bar for LNG.

When the vehicle being equipped with a system for liquefied gas is standing still and the engine is not operating the pressure in the tank will increase due to temperature increase in the tank. For safety reasons the system for liquefied gas is provided with pressure relief valves for evacuating evaporated gas. Normally the system for liquefied gas is provided with a primary pressure relief valve set to open at a certain pressure in the tank and a secondary pressure relief valve set to open at a certain pressure which is above the pressure at which the primary pressure relief valve is set to open as an additional safety precaution, should the primary pressure relief valve malfunction. A primary pressure relief valve may according to an embodiment be set to open at e.g. about 16 bar and a secondary pressure relief valve may be set to open at e.g. about 22 bar.

Such pressure relief valves need to be either replaced after a certain time span or the function of such pressure relief valves needs to be verified. In order to replace the valves the tank needs to be emptied beforehand in order to provide an environment which is not a fire or explosion hazard. The method in place for emptying the tanks is cumbersome and time consuming.

There is thus a need for a method for diagnosing pressure relief valves of a liquefied gas fuel system for a vehicle for avoiding replacement.

### OBJECTS OF THE INVENTION

An object of the present invention is to provide method for diagnosing at least one pressure relief valve of a liquefied gas fuel system for a vehicle which is easy and efficient.

Another object of the present invention is to provide system for diagnosing at least one pressure relief valve of a liquefied gas fuel system for a vehicle is easy and efficient.

### SUMMARY OF THE INVENTION

These and other objects, apparent from the following description, are achieved by a method, a system and a vehicle as set out in the appended independent claims. Preferred embodiments of the arrangement are defined in appended dependent claims.

Specifically an object of the invention is achieved by a method for diagnosing at least one pressure relief valve of a liquefied gas fuel system for a vehicle. Said fuel system has a liquefied gas fuel tank for providing fuel to the engine of the vehicle, and at least one pressure relief valve set to open at a predetermined pressure for evacuating evaporated gas. The method comprises the steps of: connecting a temporary pressure relief valve to said at least one pressure relief valve, said temporary pressure relief valve being set to open at a pressure above said predetermined pressure for which said at least one pressure relief valve is set to open; increasing the pressure in the tank to a pressure above said set pressure; determining if said at least one pressure relief valve opens; if said at least one pressure relief valve opens, determine at what pressure said at least one pressure relief valve opens; and based on the determinations of if said at least one pressure relief valve opens, and if said at least one pressure relief valve opens, at what pressure said at least one pressure relief valve opens, performing a diagnosing of the functionality of said at least one pressure relief valve.

Hereby an easy and efficient way of diagnosing the function of pressure relief valves of a liquefied gas fuel system for a vehicle is obtained. Pressure relief valves may hereby be tested so that replacement of such valves may be avoided.

According to an embodiment of the method the step of determining if said at least one pressure relief valve opens comprises utilizing one or more pressure detectors for detecting whether the pressure downstream of said at least one pressure relief valve, and hence upstream of the thus temporary connected temporary pressure relief valve increases during said pressure increase up to a certain tank pressure level above said set pressure for said primary relief valve.

According to an embodiment of the method the step of determining if said at least one pressure relief valve opens comprises utilizing one or more detectors for mechanically detecting if said primary relief valve opens. According to an embodiment the method comprises the step of determining the pressure in the liquefied gas fuel tank. The pressure in the liquefied gas fuel tank may be determined by means of any suitable detection means comprising any suitable pressure detector for detecting the pressure in the liquefied gas fuel tank.

According to an embodiment of the method the step of determining at what pressure said at least one pressure relief valve opens may comprise utilizing any suitable detection means for detecting at what pressure said at least one pressure relief valve opens, comprising utilizing one or more pressure detectors for detecting at what pressure said at least one pressure relief valve opens. Detecting at what pressure said at least one pressure relief valve opens is according to an embodiment performed downstream of said at least one pressure relief valve and upstream of said temporary pressure relief valve. Said one or more pressure detectors comprises according to an embodiment one or more manometers.

According to an embodiment of the method the step of determining at what pressure said at least one pressure relief valve opens may comprise utilizing one or more pressure detectors arranged in the tank for detecting at what pressure gas is leaving the tank via said at least one pressure relief valve. Hereby only one pressure detector is required even when there is more than one pressure relief valve, e.g. a primary relief valve and a secondary relief valve, to be diagnosed.

According to an embodiment the method comprises the step of determining a malfunction of said at least one pressure relief valve if said at least one pressure relief valve does not open or if the tank pressure at which the relief valve opens differs more than a pre-determined pressure value relative to the pressure at which at least one pressure relief valve is set to open.

According to an embodiment of the method the step of determining a malfunction comprises the step of comparing the tank pressure at which a pressure relief valve opens with said pressure at which said pressure relief valve is set to open.

According to an embodiment of the method said liquefied gas fuel system comprises a primary pressure relief valve set to open at a first predetermined pressure and a secondary pressure relief valve set to open at a second predetermined pressure higher than said first predetermined pressure, wherein the step of connecting a temporary pressure relief valve comprises connecting a temporary pressure relief valve to both the primary pressure relief valve and the secondary pressure relief valve, said temporary pressure relief valves being set to open at a pressure above said predetermined pressure for which said secondary pressure relief valve is set to open, and wherein the step of increasing the pressure in the tank comprises increasing the pressure above said set pressure for the secondary pressure relief valve, and wherein the step of determining if said at least one pressure relief valve opens comprises determining if said primary pressure relief valve opens and determining if said secondary pressure relief valve opens, and wherein the step of determining at what pressure said at least one pressure relief valve opens, if it opens, comprises determining at what pressure said primary pressure relief valve opens, if it opens, and determining at what pressure said secondary pressure relief valve opens, if it opens, and wherein the step of performing a diagnosing of the functionality of said at least one pressure relief valve comprises performing a diagnosing of the functionality of said primary pressure relief valve based on the determination of if said primary pressure relief valve opens, and if said primary pressure relief valve opens, at what pressure said primary pressure relief valve opens, and performing a diagnosing of the functionality of said secondary pressure relief valve based on the determination of if said secondary pressure relief valve opens, and if said secondary pressure relief valve opens, at what pressure said secondary pressure relief valve opens.

According to an embodiment of the method the step of increasing the pressure in the tank comprises controlling said increase of the pressure so that the pressure does not exceed said pressure set for a temporary pressure relief valve so as to avoid opening of such a temporary pressure relief valve. Hereby the risk of evacuation of evaporated gas from the tank due to opening of temporary pressure relief valves due to malfunction of said at least one pressure relief valve may be avoided.

According to an embodiment of the method the step of increasing the pressure in the tank comprises the step of introducing compressed gas into the tank. Hereby quick and efficient increase of pressure in the tank may be obtained without the need to start the engine of the vehicle for efficient diagnosing of said at least one pressure relief valve.

According to an embodiment of the method the step of introducing compressed gas into the tank comprises utilizing any suitable pump arrangement for pumping compressed gas into the tank, any suitable injector arrangement for injecting compressed gas into the tank or the like. The compressed gas may be any suitable compressed gas for increasing the pressure in the tank. The compressed gas is according to an embodiment compressed natural gas, CNG and compressed biogas CBG compressed natural gas, CNG or compressed biogas CBG or the like. The compressed gas is according to an embodiment any suitable inert gas such as nitrogen or a nitrogen based gas.

According to an embodiment of the method the step of increasing the pressure in the tank comprises the step of introducing heat into the tank. By thus forcing heat into the tank quick and efficient increase of pressure in the tank for efficient diagnosing of said at least one pressure relief valve may be obtained. The step of introducing heat into the tank may comprise controlling an economizer of said liquefied gas fuel system.

The step of introducing heat into the tank may comprise any suitable pressure build up device. The step of controlling the economizer of said liquefied gas fuel system comprises regulation of the pressure at which the economizer changes from liquid phase to gas phase to a higher pressure thus increasing the temperature of the tank and hence the pressure in the tank.

Specifically an object of the invention is achieved by a system for diagnosing at least one pressure relief valve of a liquefied gas fuel system for a vehicle. Said fuel system has a liquefied gas fuel tank for providing fuel to the engine of the vehicle, and at least one pressure relief valve set to open at a predetermined pressure for evacuating evaporated gas. The system comprises a temporary pressure relief valve being arranged to be temporary connected to said at least one pressure relief valve, said temporary pressure relief valve being set to open at a pressure above said predetermined pressure for which said at least one pressure relief valve is set to open; means for increasing the pressure in the tank to a pressure above said set pressure; means for determining if said at least one pressure relief valve opens; means for determining at what pressure said at least one pressure relief valve opens, if said at least one pressure relief valve opens; and means for performing a diagnosing of the functionality of said at least one pressure relief valve based on the determinations of if said at least one pressure relief valve opens, and if said at least one pressure relief valve opens, at what pressure said at least one pressure relief valve opens.

According to an embodiment the system comprises means for determining a malfunction of said at least one pressure relief valve if said at least one pressure relief valve does not open or if the tank pressure at which the relief valve opens differs more than a pre-determined pressure value relative to the pressure at which at least one pressure relief valve is set to open.

According to an embodiment of the system said liquefied gas fuel system comprises a primary pressure relief valve set to open at a first predetermined pressure and a secondary pressure relief valve set to open at a second predetermined pressure higher than said first predetermined pressure, wherein a temporary pressure relief valve is arranged to be temporary connected to both the primary pressure relief valve and the secondary pressure relief valve, said temporary pressure relief valves being set to open at a pressure above said predetermined pressure for which said secondary pressure relief valve is set to open, and wherein the means for increasing the pressure in the tank is arranged to increase the pressure above said set pressure for the secondary pressure relief valve, and wherein the means for determining if said at least one pressure relief valve opens is arranged to determine if said primary pressure relief valve opens and arranged to determine if said secondary pressure relief valve opens, and wherein the means for determining at what pressure said at least one pressure relief valve opens, if it opens, comprises means for determining at what pressure said primary pressure relief valve opens, if it opens, and means for determining at what pressure said secondary pressure relief valve opens, if it opens, and wherein means for performing a diagnosing of the functionality of said at least one pressure relief valve comprises means for performing a diagnosing of the functionality of said primary pressure relief valve based on the determination of if said primary pressure relief valve opens, and if said primary pressure relief valve opens, at what pressure said primary pressure relief valve opens, and means for performing a diagnosing of the functionality of said secondary pressure relief valve based on the determination of if said secondary pressure relief valve opens, and if said secondary pressure relief valve opens, at what pressure said secondary pressure relief valve opens.

According to an embodiment of the system the means for increasing the pressure in the tank comprises means for controlling said increase of the pressure so that the pressure does not exceed said pressure set for a temporary pressure relief valve so as to avoid opening of such a temporary pressure relief valve.

According to an embodiment of the system the means for increasing the pressure in the tank comprises means for introducing compressed gas into the tank.

According to an embodiment of the system the means for increasing the pressure in the tank comprises means for controlling an economizer of said liquefied gas fuel system.

The system for diagnosing at least one pressure relief valve of a liquefied gas fuel system for a vehicle is adapted to perform the methods as set out herein.

The system according to the invention has the advantages according to the corresponding methods as set out herein.

Specifically an object of the invention is achieved by a vehicle comprising a system as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a perspective view of a vehicle;
Fig. 2 schematically illustrates a liquefied gas fuel system for a vehicle provided with a system for diagnosing pressure relief valves;
Fig. 3 schematically illustrates a block diagram of a system for diagnosing at least one pressure relief valve of a liquefied gas fuel system for a vehicle according to an embodiment of the present invention; and
Fig. 4 schematically illustrates a block diagram of a method for diagnosing at least one pressure relief valve of a liquefied gas fuel system for a vehicle according to an embodiment of the present invention.

### DETAILED DESCRIPTION

Hereinafter the term "link" refers to a communication link which may be a physical connector, such as an optoelectronic communication wire, or a nonphysical connector such as a wireless connection, for example a radio or microwave link.

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG.

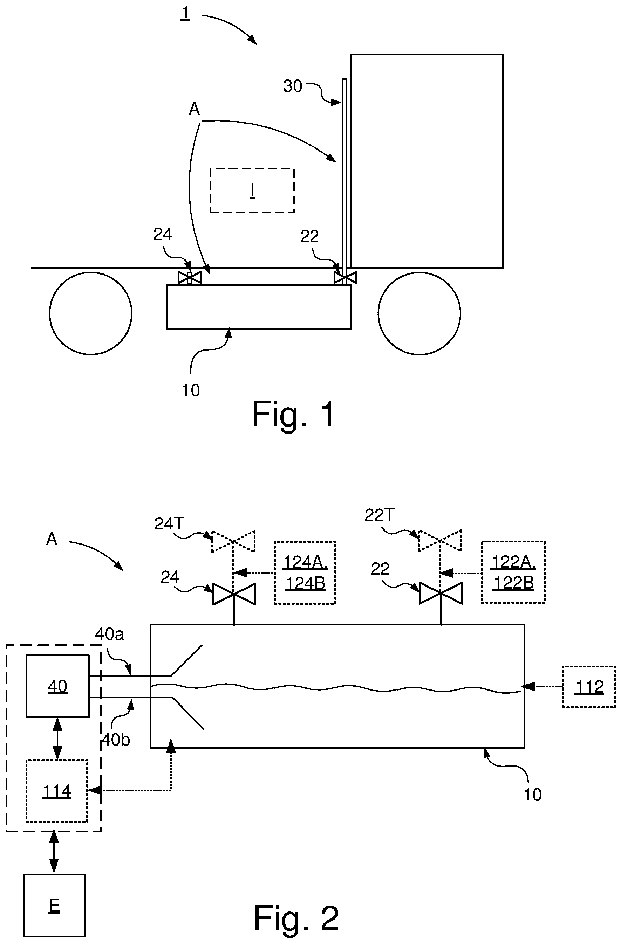

Fig. 1 schematically illustrates a side view of a vehicle 1 according to the present invention. The exemplified vehicle 1 is a heavy vehicle in the shape of a truck. The vehicle according to the present invention could be any suitable vehicle. The vehicle comprises a liquefied gas fuel system A.

The vehicle 1 is fuelled by means of said liquefied gas fuel system A for operating the engine of the vehicle. Said liquefied gas fuel system A has a liquefied gas fuel tank 10 for providing fuel to the engine of the vehicle, and a primary pressure relief valve 22 and a secondary pressure relief valve 24. Said primary pressure relief valve 22 is set to open at a certain pressure in the tank 10 and said secondary pressure relief valve 24 is set to open at a certain pressure which is above the pressure at which the primary pressure relief valve 22 is set to open for evacuating evaporated gas. The liquefied gas fuel system A comprise according to an embodiment a boil-off pipe 30 connected to said primary pressure relief valve 22 for evacuation of evaporated gas if the primary pressure relief valve 22 opens.

The vehicle comprises a system I for diagnosing at least one pressure relief valve of a liquefied gas fuel system for a vehicle. The vehicle thus comprises a system I for diagnosing said pressure relief valves 22, 24 of said liquefied gas fuel system.

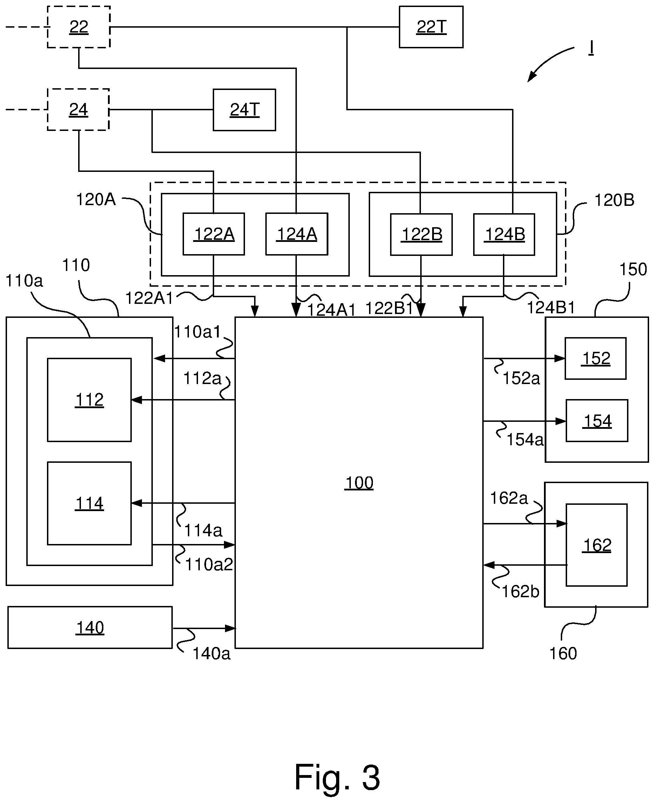

Fig. 2 schematically illustrates the liquefied gas fuel system A in fig. 1 provided with a system for diagnosing said primary pressure relief valve 22 and secondary pressure relief valve 24 of the liquefied gas fuel system A. The system for diagnosing said primary and secondary pressure relief valve corresponds according to an embodiment to the system I for diagnosing at least one pressure relief valve of a liquefied gas fuel system as described below with reference to fig. 3.

The liquefied gas fuel system A thus comprises said liquefied gas fuel tank 10 and said primary pressure relief valve 22 and secondary pressure relief valve 24.

The system for diagnosing said primary pressure relief valve 22 and secondary pressure relief valve 24 comprises a first temporary pressure relief valve 22T arranged to be temporary connected to the primary pressure relief valve 22 and a second temporary pressure relief valve 24T arranged to be temporary connected to the secondary pressure relief valve 24. Said temporary pressure relief valves 22T, 24T being set to open at a pressure above said predetermined pressure for which said secondary pressure relief valve 24 is set to open.

The system for diagnosing said primary pressure relief valve 22 and secondary pressure relief valve 24 may comprise any suitable means for increasing the pressure in the tank.

The system for diagnosing said primary pressure relief valve 22 and secondary pressure relief valve 24 comprises means 112 for introducing compressed gas into the tank 10 for increasing the pressure in the tank 10. The means 112 for introducing compressed gas into the tank 10 may comprise any suitable pump arrangement for pumping compressed gas into the tank, any suitable injector arrangement for injecting compressed gas into the tank or the like and is according to an embodiment connected via the fuel inlet of the tank 10. The means 112 for introducing compressed gas into the tank is controlled by means of any suitable pressure regulator.

The liquefied gas fuel system A further comprises an economizer 40 for regulation of the pressure in the tank 10 by means of gas pipe 40a connected to the tank 10 for gas phase regulation and a liquid pipe for liquid phase regulation. The economizer 40 is arranged to regulate the pressure in the tank by choosing suction by means of either the gas pipe 40a resulting in relatively quicker pressure reduction and suction by means of the liquid pipe 40b resulting in relatively slower pressure reduction/ no pressure reduction. The economizer 40 is according to a variant mechanically controlled for this purpose, utilizing a valve member configured to regulate from which pipe 40a, 40b the fuel is transported to the engine E of the vehicle depending on the tank pressure. The economizer 40 is according to a variant electrically controlled.

According to an embodiment the system for diagnosing said primary pressure relief valve 22 and secondary pressure relief valve 24 comprises means 114 for introducing heat into the tank 10. The means 114 for introducing heat into the tank 10 comprises according to an embodiment means for controlling the economizer 40 of said liquefied gas fuel system A. The means 114 for introducing heat into the tank 10may comprise any suitable pressure build up device. The means 114 for introducing heat into the tank 10 comprises according to an embodiment means for controlling the economizer of said liquefied gas fuel system comprises regulation of the pressure at which the economizer changes from liquid phase to gas phase to a higher pressure thus increasing the temperature of the tank and hence the pressure in the tank.

The system for diagnosing said primary pressure relief valve 22 and secondary pressure relief valve 24 may thus comprise said means 112 for introducing compressed gas into the tank and/or any said means 114 for introducing heat into the tank 10and/or any other suitable means for increasing the pressure in the tank.

The system for diagnosing said primary pressure relief valve 22 and secondary pressure relief valve 24 comprises means 122A, 122B for determining if, and if so at what pressure, said primary relief valve 22 opens and means 124A, 124B for determining if, and if so at what pressure, said secondary relief valve 24 opens. Said means 122A, 122B is according to this embodiment arranged downstream of said primary pressure relief valve 22 and upstream of said temporary primary pressure relief valve 22T and comprises one or more pressure detectors. Said means 124A, 124B is according to this embodiment arranged downstream of said secondary pressure relief valve 24 and upstream of said temporary secondary pressure relief valve 24T and comprises one or more pressure detectors.

Fig. 3 schematically illustrates a block diagram of a system I for diagnosing at least one pressure relief valve of a liquefied gas fuel system for a vehicle according to an embodiment of the present invention.

Said fuel system has a liquefied gas fuel tank for providing fuel to the engine of the vehicle, and at least one pressure relief valve 22, 24 set to open at a predetermined pressure for evacuating evaporated gas.

According to an embodiment of the system I said liquefied gas fuel system comprises a primary pressure relief valve 22 set to open at a first predetermined pressure and a secondary pressure relief valve 24 set to open at a second predetermined pressure higher than said first predetermined pressure set for the primary pressure relief valve 22.

The system I comprises an electronic control unit 100.

The system I comprises a temporary pressure relief valve 22T, 24T being arranged to be temporary connected to said at least one pressure relief valve 22, 24. Said temporary pressure relief valve 22T, 24T is set to open at a pressure above said predetermined pressure for which said at least one pressure relief valve is set to open.

A temporary pressure relief valve 22T, 24T is arranged to be temporary connected to both the primary pressure relief valve 22 and the secondary pressure relief valve 24, said temporary pressure relief valves 22T, 24T being set to open at a pressure above said predetermined pressure for which said secondary pressure relief valve 24 is set to open.

The system I thus comprises a first temporary pressure relief valve 22T arranged to be temporary connected to the primary pressure relief valve 22 and a second temporary pressure relief valve 24T arranged to be temporary connected to the secondary pressure relief valve 24.

The system I comprises means 140 for determining the pressure in the liquefied gas fuel tank. Said means 140 for determining the pressure in the tank may comprise any suitable detection means comprising any suitable pressure detector for detecting the pressure in the liquefied gas fuel tank. Said means 140 for determining the pressure in the tank may thus comprise one or more pressure detectors.

The system I comprises means 110 for increasing the pressure in the tank to a pressure above said set pressure. The means 110 for increasing the pressure in the tank is arranged to increase the pressure above said set pressure for the secondary pressure relief valve 24.

According to an embodiment of the system I the means 110 for increasing the pressure in the tank comprises means 110a for controlling said increase of the pressure so that the pressure does not exceed said pressure set for a temporary pressure relief valve so as to avoid opening of such a temporary pressure relief valve. The means 110a for controlling said increase of the pressure may comprise any suitable control means based on information regarding the current pressure in the tank. The means 110a for controlling said increase of the pressure may comprise any suitable pressure regulator. The means 110a for controlling said increase of the pressure is according to an embodiment comprised in said electronic control unit 100.

According to an embodiment of the system the means 110 for increasing the pressure in the tank comprises means 112 for introducing compressed gas into the tank. The means 112 for introducing compressed gas into the tank may comprise any suitable pump arrangement for pumping compressed gas into the tank, any suitable injector arrangement for injecting compressed gas into the tank or the like. The means 112 for introducing compressed gas into the tank comprises according to an embodiment connection means for connection to the fuel inlet of said tank. The means 112 for introducing compressed gas into the tank is arranged to be controlled by means of said means 110a for controlling said increase of the pressure, e.g. by means of any suitable pressure regulator.

The compressed gas may be any suitable compressed gas for increasing the pressure in the tank. The compressed gas is according to an embodiment compressed natural gas, CNG and compressed biogas CBG compressed natural gas, CNG or compressed biogas CBG or the like. The compressed gas is according to an embodiment any suitable inert gas such as nitrogen or a nitrogen based gas.

According to an embodiment of the system the means 110 for increasing the pressure in the tank comprises means 114 for introducing heat into the tank . The means 114 for introducing heat into the tank may comprise any suitable pressure build up device. The means 114 for introducing heat into the tank comprises according to an embodiment means for controlling an economizer of said liquefied gas fuel system, comprising regulation of the pressure at which the economizer changes from liquid phase to gas phase to a higher pressure thus increasing the temperature of the tank and hence the pressure in the tank.

The means 114 for introducing heat into the tank is arranged to be controlled by means of said means 110a for controlling said increase of the pressure.

The system I comprises means 120A for determining if said at least one pressure relief valve 22, 24 opens.

The means 120A for determining if said at least one pressure relief valve 22, 24 opens is thus arranged to determine if said primary pressure relief valve 22 opens and arranged to determine if said secondary pressure relief valve 24 opens.

The means 120A for determining if said at least one pressure relief valve 22, 24 opens may comprise any suitable detection means for detecting if said at least one pressure relief valve 22, 24 opens. The means 120A for determining if said at least one pressure relief valve 22, 24 opens may comprise one or more pressure detectors for detecting whether the pressure downstream of said at least one pressure relief valve, and hence upstream of the thus temporary connected temporary pressure relief valve 22T, 24T increases during said pressure increase up to a certain tank pressure level above said set pressure for said at least one pressure relief valve.

The means 120A for determining if said at least one pressure relief valve 22, 24 opens may comprise one or more detectors for mechanically detecting if said at least one pressure relief valve 22, 24 opens.

The means 120A for determining if said at least one pressure relief valve opens comprises means 122A for determining if said primary relief valve 22 opens. The means 122A for determining if said primary relief valve 22 opens may comprise one or more pressure detectors for detecting whether the pressure downstream of said primary relief valve 22, and hence upstream of the thus temporary connected temporary pressure relief valve 22T increases during said pressure increase up to a certain tank pressure level above said set pressure for said primary relief valve 22.

The means 122A for determining if said primary relief valve 22 opens may comprise one or more detectors for mechanically detecting if said primary relief valve 22 opens.

The means 120A for determining if said at least one pressure relief valve opens comprises means 124A means 120A for determining if said secondary relief valve 24 opens. The means 124A for determining if said secondary relief valve 24 opens may comprise one or more pressure detectors for detecting whether the pressure downstream of said secondary relief valve 24, and hence upstream of the thus temporary connected temporary pressure relief valve 24T increases during said pressure increase up to a certain tank pressure level above said set pressure for said secondary relief valve 24.

The means 124A for determining if said secondary relief valve 24 opens may comprise one or more detectors for mechanically detecting if said secondary relief valve 24 opens.

The system I comprises means 120B for determining at what pressure said at least one pressure relief valve 22, 24 opens, if said at least one pressure relief valve 22, 24 opens.

The means 120B for determining at what pressure said at least one pressure relief valve 22, 24 opens is thus arranged to determine at what pressure said primary pressure relief valve 22 opens and arranged to determine at what pressure said secondary pressure relief valve 24 opens.

The means 120B for determining at what pressure said at least one pressure relief valve 22, 24 opens may comprise any suitable detection means for detecting at what pressure said at least one pressure relief valve 22, 24 opens. The means 120B for determining at what pressure said at least one pressure relief valve 22, 24 opens may comprise one or more pressure detectors for detecting at what pressure said at least one pressure relief valve 22, 24 opens. The means 120B for determining at what pressure said at least one pressure relief valve 22, 24 opens is arranged to determine the pressure downstream of said at least one pressure relief valve, and hence upstream of the thus temporary connected temporary pressure relief valve 22T, 24T when it starts to increase during said pressure increase. The means 120B for determining at what pressure said at least one pressure relief valve 22, 24 opens comprises according to an embodiment one or more manometers.

The means 120B for determining at what pressure said at least one pressure relief valve 22, 24 opens comprises means 122B for determining at what pressure said primary relief valve 22 opens. The means 122B for determining at what pressure said primary relief valve 22 opens is arranged to determine the pressure downstream of said primary relief valve 22, and hence upstream of the thus temporary connected temporary pressure relief valve 22T when it starts to increase during said pressure increase. The means 122B for determining at what pressure said primary relief valve 22 opens comprises according to an embodiment one or more manometers.

The means 120B for determining at what pressure said at least one pressure relief valve 24, 24 opens comprises means 124B for determining at what pressure said secondary relief valve 24 opens. The means 124B for determining at what pressure said secondary relief valve 24 opens is arranged to determine the pressure downstream of said secondary relief valve 24, and hence upstream of the thus temporary connected temporary pressure relief valve 24T when it starts to increase during said pressure increase. The means 124B for determining at what pressure said secondary relief valve 24 opens comprises according to an embodiment one or more manometers.

The means 120A for determining if said at least one pressure relief valve 22, 24 opens and the means 120B for determining at what pressure said at least one pressure relief valve 22, 24 opens, if said at least one pressure relief valve 22, 24 opens may be constituted by the same means, e.g. the same pressure detectors may be arranged to detect if said at least one pressure relief valve 22, 24 opens and if so at what pressure said at least one pressure relief valve 22, 24 opens. Thus the means 122A and means 122B is according to an embodiment the same means 122A, 122B, e.g. pressure detector, and the means 124A and means 124B is according to an embodiment the same means 124A, 124B, e.g. pressure detector.

According to an embodiment of the system I the means 120A, 120B for determining if, and if so at what pressure, said at least one pressure relief valve opens may comprise one or more pressure detectors arranged in the tank for detecting at what pressure gas is leaving the tank via said at least one pressure relief valve. The means 120A, 120B may thus comprise the means 140 for determining the pressure in the tank.

The system I comprises means 150 for performing a diagnosing of the functionality of said at least one pressure relief valve based on the determinations of if, and if so at what tank pressure said at least one pressure relief valve opens.

Said means 150 for performing a diagnosing of the functionality of said at least one pressure relief valve based on the determinations of if, and if so at what tank pressure said at least one pressure relief valve opens comprises according to an embodiment manually viewing manometers indicating possible detected pressures for an operator.

Said means 150 for performing a diagnosing of the functionality of said at least one pressure relief valve based on the determinations of if, and if so at what tank pressure said at least one pressure relief valve opens comprises according to an embodiment processing means for processing data of said determinations for performing said diagnosing of the functionality of said at least one pressure relief valve. Said processing means may be comprised in said electronic control unit 100.

The thus performed diagnosing may be presented by means of any suitable presentation means comprising any suitable visual means such as a display unit and/or any suitable sound means such as an alarm or the like. Said means 150 for performing a diagnosing comprises according to an embodiment presentation means. Said means 150 for performing a diagnosing may comprise storage means for storing results of said diagnosing.

Said means 150 for performing a diagnosing of the functionality of said at least one pressure relief valve 22, 24 comprises means 152 for performing a diagnosing of the functionality of said primary pressure relief valve 22 based on the determination of if, and if so, at what pressure said primary pressure relief valve opens.

Said means 150 for performing a diagnosing of the functionality of said at least one pressure relief valve 22, 24 comprises means 154 for performing a diagnosing of the functionality of said secondary pressure relief valve 24 based on the determination of if, and if so, at what pressure said secondary pressure relief valve opens.

According to an embodiment the system comprises means 160 for determining a malfunction of said at least one pressure relief valve 22, 24 if said at least one pressure relief valve does not open or if the tank pressure at which the pressure relief valve opens differs more than a pre-determined pressure value relative to the pressure at which said at least one pressure relief valve is set to open.

Said means 160 for determining a malfunction comprises means 162 for comparing the tank pressure at which a pressure relief valve opens with said pressure at which said pressure relief valve is set to open.

According to an embodiment said means 160 for determining a malfunction of said at least one pressure relief valve 22, 24 is comprised in the means 150 for preforming a diagnosing.

The electronic control unit 100 is operably connected to the means 140 for determining the pressure in the liquefied gas fuel tank via a link 140a. The electronic control unit 100 is via the link 140 arranged to receive a signal from said means 140 representing data for current tank pressure.

The electronic control unit 100 is operably connected to the means 110a for controlling said increase of the pressure so that the pressure does not exceed said pressure set for a temporary pressure relief valve so as to avoid opening of such a temporary pressure relief valve via a link 110a1. The electronic control unit 100 is via the link 110a1 arranged to send a signal to said means 140 representing data for current tank pressure.

The electronic control unit 100 is operably connected to the means 110a for controlling said increase of the pressure so that the pressure does not exceed said pressure set for a temporary pressure relief valve so as to avoid opening of such a temporary pressure relief valve via a link 110a2. The electronic control unit 100 is via the link 110a2 arranged to receive a signal from said means 110 representing data for control of pressure increase.

The electronic control unit 100 is operably connected to the means 112 for introducing compressed gas in the tank via a link 112a. The electronic control unit 100 is via the link 112a arranged to send a signal to said means 112 representing data for controlling introduction of gas in the tank for said pressure increase.

The electronic control unit 100 is operably connected to the means 114 for introducing heat in the tank via a link 114a. The electronic control unit 100 is via the link 114a arranged to send a signal to said means 114 representing data for controlling introduction of heat in the tank for said pressure increase.

The electronic control unit 100 is operably connected to the means 122A for determining if said primary relief valve 22 opens via a link 122A1. The electronic control unit 100 is via the link 122A1 arranged to receive a signal from said means 122A representing data for opening status of said primary relief valve 22.

The electronic control unit 100 is operably connected to the means 124A for determining if said secondary relief valve 24 opens via a link 124A1. The electronic control unit 100 is via the link 124A1 arranged to receive a signal from said means 124A representing data for opening status of said secondary relief valve 24.

The electronic control unit 100 is operably connected to the means 122B for determining at what pressure said primary relief valve 22 opens via a link 122B1. The electronic control unit 100 is via the link 122B1 arranged to receive a signal from said means 122B representing data for pressure at which said primary relief valve 22 opened.

The electronic control unit 100 is operably connected to the means 124B for determining at what pressure said secondary relief valve 24 opens via a link 124B1. The electronic control unit 100 is via the link 124B1 arranged to receive a signal from said means 124B representing data for pressure at which said secondary relief valve 24 opened.

The electronic control unit 100 is operably connected to the means 152 for performing a diagnosing of the functionality of said primary pressure relief valve 22 based on the determination of if, and if so, at what pressure said primary pressure relief valve opens via a link 152a. The electronic control unit 100 is via the link 152a arranged to send a signal to said means 152 representing data for if, and if so at which said primary relief valve 22 opened.

The electronic control unit 100 is operably connected to the means 154 for performing a diagnosing of the functionality of said secondary pressure relief valve 24 based on the determination of if, and if so, at what pressure said secondary pressure relief valve opens via a link 154a. The electronic control unit 100 is via the link 154a arranged to send a signal to said means 154 representing data for if, and if so at what pressure said secondary relief valve 24 opened.

The electronic control unit 100 is operably connected to the means 162 for comparing the tank pressure at which a pressure relief valve opens with said pressure at which said pressure relief valve is set to open via a link 162a. The electronic control unit 100 is via the link 162a arranged to send a signal to said means 162 representing data for tank pressure at which a pressure relief valve opened.

The electronic control unit 100 is operably connected to the means 162 for comparing the tank pressure at which a pressure relief valve opens with said pressure at which said pressure relief valve is set to open via a link 162b. The electronic control unit 100 is via the link 162b arranged to receive a signal from said means 162 representing data for possible determined malfunction of a relief valve.

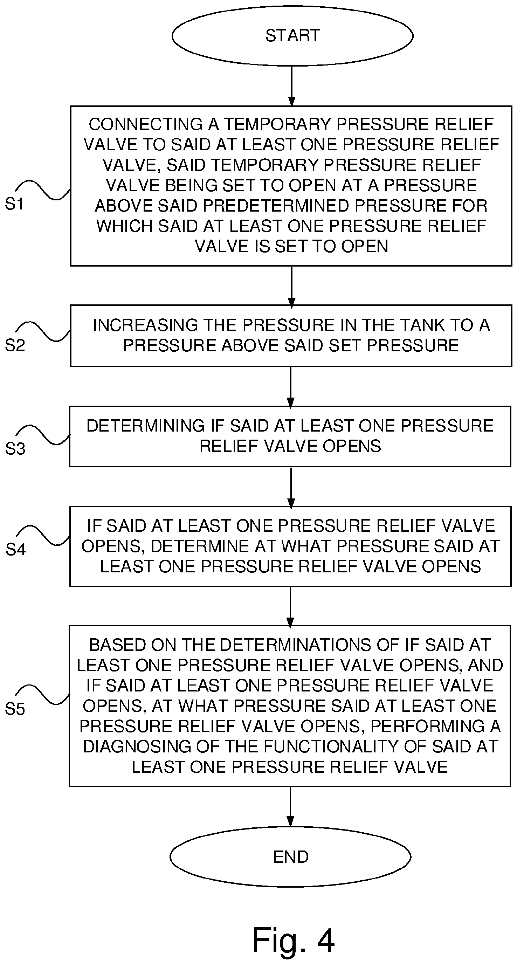

Fig. 4 schematically illustrates a block diagram of a method for diagnosing at least one pressure relief valve of a liquefied gas fuel system for a vehicle according to an embodiment of the present invention.

Said fuel system has a liquefied gas fuel tank for providing fuel to the engine of the vehicle, and at least one pressure relief valve set to open at a predetermined pressure for evacuating evaporated gas.

According to the embodiment the method for diagnosing at least one pressure relief valve of a liquefied gas fuel system for a vehicle comprises a step S1. In this step a temporary pressure relief valve is connected to said at least one pressure relief valve, said temporary pressure relief valve being set to open at a pressure above said predetermined pressure for which said at least one pressure relief valve is set to open.

According to the embodiment the method for diagnosing at least one pressure relief valve of a liquefied gas fuel system for a vehicle comprises a step S2. In this step the pressure in the tank is increased to a pressure above said set pressure.

According to the embodiment the method for diagnosing at least one pressure relief valve of a liquefied gas fuel system for a vehicle comprises a step S3. In this step it is determined if said at least one pressure relief valve opens.

According to the embodiment the method for diagnosing at least one pressure relief valve of a liquefied gas fuel system for a vehicle comprises a step S4. In this step, if said at least one pressure relief valve opens, it is determine at what pressure said at least one pressure relief valve opens.

According to the embodiment the method for diagnosing at least one pressure relief valve of a liquefied gas fuel system for a vehicle comprises a step S5. In this step a diagnosing of the functionality of said at least one pressure relief valve is performed based on the determinations of if, and if so at what tank pressure said at least one pressure relief valve opens.

According to an embodiment of the method the step of determining if said at least one pressure relief valve opens comprises utilizing one or more pressure detectors for detecting whether the pressure downstream of said at least one pressure relief valve, and hence upstream of the thus temporary connected temporary pressure relief valve increases during said pressure increase up to a certain tank pressure level above said set pressure for said primary relief valve.

According to an embodiment of the method the step of determining if said at least one pressure relief valve opens comprises utilizing one or more detectors for mechanically detecting if said primary relief valve opens.

According to an embodiment the method comprises the step of determining the pressure in the liquefied gas fuel tank. The pressure in the liquefied gas fuel tank may be determined by means of any suitable detection means comprising any suitable pressure detector for detecting the pressure in the liquefied gas fuel tank.

According to an embodiment of the method the step of determining at what pressure said at least one pressure relief valve opens may comprise utilizing any suitable detection means for detecting at what pressure said at least one pressure relief valve opens, comprising utilizing one or more pressure detectors for detecting at what pressure said at least one pressure relief valve opens. Said one or more pressure detectors comprises according to an embodiment one or more manometers.

According to an embodiment the method comprises the step of determining a malfunction of said at least one pressure relief valve if said at least one pressure relief valve does not open or if the tank pressure at which the relief valve opens differs more than a pre-determined pressure value relative to the pressure at which at least one pressure relief valve is set to open.

According to an embodiment of the method the step of determining a malfunction comprises the step of comparing the tank pressure at which a pressure relief valve opens with said pressure at which said pressure relief valve is set to open.

According to an embodiment of the method said liquefied gas fuel system comprises a primary pressure relief valve set to open at a first predetermined pressure and a secondary pressure relief valve set to open at a second predetermined pressure higher than said first predetermined pressure, wherein the step of connecting a temporary pressure relief valve comprises connecting a temporary pressure relief valve to both the primary pressure relief valve and the secondary pressure relief valve, said temporary pressure relief valves being set to open at a pressure above said predetermined pressure for which said secondary pressure relief valve is set to open, and wherein the step of increasing the pressure in the tank comprises increasing the pressure above said set pressure for the secondary pressure relief valve, and wherein the step of determining if said at least one pressure relief valve opens comprises determining if said primary pressure relief valve opens and determining if said secondary pressure relief valve opens, and wherein the step of determining at what pressure said at least one pressure relief valve opens, if it opens, comprises determining at what pressure said primary pressure relief valve opens, if it opens, and determining at what pressure said secondary pressure relief valve opens, if it opens, and wherein the step of performing a diagnosing of the functionality of said at least one pressure relief valve comprises performing a diagnosing of the functionality of said primary pressure relief valve based on the determination of if, and if so, at what pressure said primary pressure relief valve opens, and performing a diagnosing of the functionality of said secondary pressure relief valve based on the determination of if, and if so, at what pressure said secondary pressure relief valve opens.

According to an embodiment of the method the step of increasing the pressure in the tank comprises controlling said increase of the pressure so that the pressure does not exceed said pressure set for a temporary pressure relief valve so as to avoid opening of such a temporary pressure relief valve.

According to an embodiment of the method the step of increasing the pressure in the tank comprises the step of introducing compressed gas into the tank.

According to an embodiment of the method the step of introducing compressed gas into the tank comprises utilizing any suitable pump arrangement for pumping compressed gas into the tank, any suitable injector arrangement for injecting compressed gas into the tank or the like. The compressed gas may be any suitable compressed gas for increasing the pressure in the tank. The compressed gas is according to an embodiment compressed natural gas, CNG and compressed biogas CBG compressed natural gas, CNG or compressed biogas CBG or the like. The compressed gas is according to an embodiment any suitable inert gas such as nitrogen or a nitrogen based gas.

According to an embodiment of the method the step of increasing the pressure in the tank comprises the step of introducing heat into the tank. The step of introducing heat into the tank may comprise controlling an economizer of said liquefied gas fuel system.

The step of introducing heat into the tank may comprise any suitable pressure build up device. The step of controlling the economizer of said liquefied gas fuel system comprises regulation of the pressure at which the economizer changes from liquid phase to gas phase to a higher pressure thus increasing the temperature of the tank and hence the pressure in the tank.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A method for diagnosing at least one pressure relief valve of a liquefied gas fuel system for a vehicle (1), said fuel system (A) having a liquefied gas fuel tank (10) for providing fuel to the engine of the vehicle (1), and at least one pressure relief valve (22, 24) set to open at a predetermined pressure for evacuating evaporated gas, **characterized by** the steps of: connecting (S1) a temporary pressure relief valve (22T, 24T) to said at least one pressure relief valve (22, 24), said temporary pressure relief valve being set to open at a pressure above said predetermined pressure for which said at least one pressure relief valve is set to open; increasing (S2) the pressure in the tank to a pressure above said set pressure; determining (S3) if said at least one pressure relief valve opens (22, 24); if said at least one pressure relief valve opens, determine (S4) at what pressure said at least one pressure relief valve opens; and based on the determinations of if said at least one pressure relief valve opens, and if said at least one pressure relief valve opens, at what pressure said at least one pressure relief valve opens, performing (S5) a diagnosing of the functionality of said at least one pressure relief valve.

2. A method according to claim 1, comprising the step of determining a malfunction of said at least one pressure relief valve (22, 24) if said at least one pressure relief valve (22, 24) does not open or if the tank pressure at which the relief valve opens differs more than a pre-determined pressure value relative to the pressure at which at least one pressure relief valve (22, 24) is set to open.

3. A method according to claim 1, said liquefied gas fuel system (A) comprising a primary pressure relief (22) valve set to open at a first predetermined pressure and a secondary pressure relief valve (24) set to open at a second predetermined pressure higher than said first predetermined pressure, wherein the step of connecting a temporary pressure relief valve (22T, 24T) comprises connecting a temporary pressure relief valve to both the primary pressure relief valve and the secondary pressure relief valve, said temporary pressure relief valves (22T, 24T) being set to open at a pressure above said predetermined pressure for which said secondary pressure relief valve (24) is set to open, and wherein the step of increasing the pressure in the tank comprises increasing the pressure above said set pressure for the secondary pressure relief valve (24), and wherein the step of determining if said at least one pressure relief valve opens comprises determining if said primary pressure relief valve (22) opens and determining if said secondary pressure relief valve (24) opens, and wherein the step of determining at what pressure said at least one pressure relief valve opens, if it opens, comprises determining at what pressure said primary pressure relief valve (22) opens, if it opens, and determining at what pressure said secondary pressure relief valve (24) opens, if it opens, and wherein the step of performing a diagnosing of the functionality of said at least one pressure relief valve comprises performing a diagnosing of the functionality of said primary pressure relief valve (22) based on the determination of if said primary pressure relief valve (22) opens, and if said primary pressure relief valve (22) opens, at what pressure said primary pressure relief valve (22) opens, and performing a diagnosing of the functionality of said secondary pressure relief valve (24) based on the determination of if said secondary pressure relief valve (24) opens, and if said secondary pressure relief valve (24) opens, at what pressure said secondary pressure relief valve (24) opens.

4. A method according to any preceding claims, wherein the step of increasing the pressure in the tank (10) comprises controlling said increase of the pressure so that the pressure does not exceed said pressure set for a temporary pressure relief valve (22T, 24T) so as to avoid opening of such a temporary pressure relief valve.

5. A method according to any preceding claims, wherein the step of increasing the pressure in the tank (10) comprises the step of introducing compressed gas into the tank.

6. A method according to any preceding claims, wherein the step of increasing the pressure in the tank (10) comprises the step of introducing heat into the tank.

7. A system (I) for diagnosing at least one pressure relief valve (22, 24) of a liquefied gas fuel system (A) for a vehicle (1), said fuel system (A) having a liquefied gas fuel tank (10) for providing fuel to the engine (E) of the vehicle (1), and at least one pressure relief valve (22, 24) set to open at a predetermined pressure for evacuating evaporated gas, **characterized in that** the system (I) comprises a temporary pressure relief valve (22T, 24T) being arranged to be temporary connected to said at least one pressure relief valve (22, 24), said temporary pressure relief valve (22T, 24T) being set to open at a pressure above said predetermined pressure for which said at least one pressure relief valve (22, 24) is set to open; means (110) for increasing the pressure in the tank (10) to a pressure above said set pressure; means (120A) for determining if said at least one pressure relief valve (22, 24) opens; means (120B) for determining at what pressure said at least one pressure relief valve (22, 24) opens, if said at least one pressure relief valve (22, 24) opens; and means (150) for performing a diagnosing of the functionality of said at least one pressure relief valve (22, 24) based on the determinations of if said at least one pressure relief valve (22, 24) opens, and if said at least one pressure relief valve (22, 24) opens, at what pressure said at least one pressure relief valve (22, 24) opens.

8. A system according to claim 7, comprising means (160) for determining a malfunction of said at least one pressure relief valve (22, 24) if said at least one pressure relief valve (22, 24) does not open or if the tank pressure at which the pressure relief valve opens differs more than a pre-determined pressure value relative to the pressure at which said at least one pressure relief valve (22, 24) is set to open.

9. A system according to claim 7 or 8, said liquefied gas fuel system (A) comprising a primary pressure relief valve (22) set to open at a first predetermined pressure and a secondary pressure relief valve (24) set to open at a second predetermined pressure higher than said first predetermined pressure, wherein a temporary pressure relief valve (22T, 24T) is arranged to be temporary connected to both the primary pressure relief valve (22) and the secondary pressure relief valve (24), said temporary pressure relief valves (22T, 24T) being set to open at a pressure above said predetermined pressure for which said secondary pressure relief valve (24) is set to open, and wherein the means (110) for increasing the pressure in the tank is arranged to increase the pressure above said set pressure for the secondary pressure relief valve (24), and wherein means (120A) for determining if said at least one pressure relief valve opens is arranged to determine if said primary pressure relief valve opens and arranged to determine if said secondary pressure relief valve opens, and wherein the means (120B) for determining at what pressure said at least one pressure relief valve opens, if it opens, comprises means (122B) for determining at what pressure said primary pressure relief valve (22) opens, if it opens, and means (124B) for determining at what pressure said secondary pressure relief valve (24) opens, if it opens, and wherein said means (150) for performing a diagnosing of the functionality of said at least one pressure relief valve comprises means (152) for performing a diagnosing of the functionality of said primary pressure relief valve (22) based on the determination of if said primary pressure relief valve (22) opens, and if said primary pressure relief valve (22) opens, at what pressure said primary pressure relief valve (22) opens, and means (154) for performing a diagnosing of the functionality of said secondary pressure relief valve based on the determination of if said secondary pressure relief valve (24) opens, and if said secondary pressure relief valve (24) opens, at what pressure said secondary pressure relief valve (24) opens.

10. A system according to any of claims 7-9, wherein the means (110) for increasing the pressure in the tank comprises means (110a) for controlling said increase of the pressure so that the pressure does not exceed said pressure set for a temporary pressure relief valve (22T, 24T) so as to avoid opening of such a temporary pressure relief valve (22T, 24T).

11. A system according to any of claims 7-10, wherein the means (110) for increasing the pressure in the tank (10) comprises means (112) for introducing compressed gas into the tank (10).

12. A system according to any of claims 7-11, wherein the means (110) for increasing the pressure in the tank (10) comprises means (114) for introducing heat into the tank (10).

13. A vehicle (1) comprising system according to any of claims 7-12.

## Patentansprüche

1. Verfahren zum Prüfen mindestens eines Druckentlastungsventils eines Flüssiggaskraftstoffsystems für ein Fahrzeug (1), wobei das Kraftstoffsystem (A) einen Flüssiggaskraftstofftank (10) zur Versorgung des Motors des Fahrzeugs (1) mit Kraftstoff und zumindest ein Druckentlastungsventil (22, 24) aufweist, das dazu eingestellt ist, bei einem vorbestimmten Druck zum Ablassen von verdampftem Gas zu öffnen, **gekennzeichnet durch** die Schritte: Verbinden (S1) eines temporären Druckentlastungsventils (22T, 24T) mit dem mindestens einen Druckentlastungsventil (22, 24), wobei das temporäre Druckentlastungsventil dazu eingestellt ist, bei einem Druck oberhalb des vorbestimmten Drucks zu öffnen, auf den das mindestens eine Druckentlastungsventil zum Öffnen eingestellt ist, Erhöhen (S2) des Drucks in dem Tank auf einen Druck oberhalb des eingestellten Drucks, Feststellen (S3), ob das mindestens eine Druckentlastungsventil (22, 24) öffnet, falls das mindestens eine Druckentlastungsventil öffnet, Feststellen (S4), bei welchem Druck das mindestens eine Druckentlastungsventil öffnet, und, basierend auf den Feststellungen, ob das mindestens eine Druckentlastungsventil öffnet und, falls das mindestens eine Druckentlastungsventil öffnet, bei welchem Druck das mindestens eine Druckentlastungsventil öffnet, Durchführen (S5) einer Prüfung der Funktionalität des mindestens einen Druckentlastungsventils.

2. Verfahren nach Anspruch 1, umfassend den Schritt des Feststellens einer Fehlfunktion des mindestens einen Druckentlastungsventils (22, 24), falls das mindestens eine Druckentlastungsventil (22, 24) nicht öffnet oder falls der Tankdruck, bei dem das Druckentlastungsventil öffnet, sich um mehr als einen vorgegebenen Druckwert von dem Druck unterscheidet, auf den das mindestens eine Druckentlastungsventil (22, 24) zum Öffnen eingestellt ist.

3. Verfahren nach Anspruch 1, wobei das Flüssiggaskraftstoffsystem (A) ein Hauptdruckentlastungsventil (22), das dazu eingestellt ist, bei einem ersten vorbestimmten Druck zu öffnen, und ein Hilfsdruckentlastungsventil (24) aufweist, das dazu eingestellt ist, bei einem zweiten vorbestimmten Druck zu öffnen, der höher ist als der erste vorbestimmte Druck, wobei der Schritt des Verbindens eines temporären Druckentlastungsventils (22T, 24T) ein Verbinden eines temporären Druckentlastungsventils mit dem Hauptdruckentlastungsventil und dem Hilfsdruckentlastungsventil umfasst, wobei die temporären Druckentlastungsventile (22T, 24T) dazu eingestellt sind, bei einem Druck oberhalb des vorbestimmten Drucks zu öffnen, auf den das Hilfsdruckentlastungsventil (24) zum Öffnen eingestellt ist, und wobei der Schritt des Erhöhens des Drucks in dem Tank ein Erhöhen des Drucks über den für das Hilfsdruckentlastungsventil (24) eingestellten Druck umfasst, und wobei der Schritt des Feststellens, ob das mindestens eine Druckentlastungsventil öffnet, ein Feststellen umfasst, ob das Hauptdruckentlastungsventil (22) öffnet, und ein Feststellen, ob das Hilfsdruckentlastungsventil (24) öffnet, und wobei der Schritt des Feststellens, bei welchem Druck das mindestens eine Druckentlastungsventil öffnet, falls es öffnet, ein Feststellen umfasst, bei welchem Druck das Hauptdruckentlastungsventil (22) öffnet, falls es öffnet, und ein Feststellen, bei welchem Druck das Hilfsdruckentlastungsventil (24) öffnet, falls es öffnet, und wobei der Schritt des Durchführens einer Prüfung der Funktionalität des mindestens einen Druckentlastungsventils ein Durchführen einer Prüfung der Funktionalität des Hauptdruckentlastungsventils (22) basierend auf der Feststellung umfasst, ob das Hauptdruckentlastungsventil (22) öffnet und, falls das Hauptdruckentlastungsventil (22) öffnet, bei welchem Druck das Hauptdruckentlastungsventil (22) öffnet, und ein Durchführen einer Prüfung der Funktionalität des Hilfsdruckentlastungsventils (24) basierend auf der Feststellung umfasst, ob das Hilfsdruckentlastungsventil (24) öffnet und, falls das Hilfsdruckentlastungsventil (24) öffnet, bei welchem Druck das Hilfsdruckentlastungsventil (24) öffnet.

4. Verfahren nach einem der vorhergehenden Ansprüche, bei dem der Schritt des Erhöhens des Drucks in dem Tank (10) ein Steuern des Druckanstiegs solchermaßen umfasst, dass der Druck den für ein temporäres Druckentlastungsventil (22T, 24T) eingestellten Druck nicht übersteigt, um ein Öffnen eines solchen temporären Druckentlastungsventils zu vermeiden.

5. Verfahren nach einem der vorhergehenden Ansprüche, bei dem der Schritt des Erhöhens des Drucks in dem Tank (10) den Schritt des Einleitens von komprimiertem Gas in den Tank umfasst.

6. Verfahren nach einem der vorhergehenden Ansprüche, bei dem der Schritt des Erhöhens des Drucks in dem Tank (10) den Schritt des Einleitens von Wärme in den Tank umfasst.

7. System (I) zum Prüfen mindestens eines Druckentlastungsventils (22, 24) eines Flüssiggaskraftstoffsystems (A) für ein Fahrzeug (1), wobei das Kraftstoffsystem (A) einen Flüssiggaskraftstofftank (10) zur Versorgung des Motors (E) des Fahrzeugs (1) mit Kraftstoff und mindestens ein Druckentlastungsventil (22, 24) aufweist, das dazu eingestellt ist, bei einem vorbestimmten Druck zum Ablassen von verdampften Gas zu öffnen, **dadurch gekennzeichnet, dass** das System (I) ein temporäres Druckentlastungsventil (22T, 24T), welches dazu angeordnet ist, zeitweilig mit dem mindestens einen Druckentlastungsventil (22, 24) verbunden zu werden, wobei das temporäre Druckentlastungsventil (22T, 24T) dazu eingestellt ist, bei einem Druck oberhalb des vorbestimmten Drucks zu öffnen, auf den das mindestens eine Druckentlastungsventil (22, 24) zum Öffnen eingestellt ist, Mittel (110) zum Erhöhen des Drucks in dem Tank (10) auf einen Druck oberhalb des eingestellten Drucks, Mittel (120A) zum Feststellen, ob das mindestens eine Druckentlastungsventil (22, 24) öffnet, Mittel (120B) zum Feststellen, bei welchem Druck das mindestens eine Druckentlastungsventil (22, 24) öffnet, falls das mindestens eine Druckentlastungsventil (22, 24) öffnet, und Mittel (150) zum Durchführen einer Prüfung der Funktionalität des mindestens einen Druckentlastungsventils (22, 24) basierend auf den Feststellungen umfasst, ob das mindestens eine Druckentlastungsventil (22, 24) öffnet, und falls das mindestens eine Druckentlastungsventil (22, 24) öffnet, bei welchem Druck das mindestens eine Druckentlastungsventil (22, 24) öffnet.

8. System nach Anspruch 7, mit Mitteln (160) zum Feststellen einer Fehlfunktion des mindestens einen Druckentlastungsventils (22, 24), falls das mindestens eine Druckentlastungsventil (22, 24) nicht öffnet oder falls der Tankdruck, bei dem das Druckentlastungsventil öffnet, sich um mehr als einen vorbestimmten Druckwert von dem Druck unterscheidet, auf den das mindestens eine Druckentlastungsventil (22, 24) zum Öffnen eingestellt ist.

9. System nach Anspruch 7 oder 8, wobei das Flüssiggaskraftstoffsystem (A) ein Hauptdruckentlastungsventil (22), das dazu eingestellt ist, bei einem ersten vorbestimmten Druck zu öffnen, und ein Hilfsdruckentlastungsventil (24) umfasst, das dazu eingestellt ist, bei einem zweiten vorbestimmten Druck zu öffnen, der höher ist als der erste vorbestimmte Druck, wobei ein temporäres Druckentlastungsventil (22T, 24T) dazu angeordnet ist, zeitweilig mit dem Hauptdruckentlastungsventil (22) und dem Hilfsdruckentlastungsventil (24) verbunden zu werden, wobei die temporären Druckentlastungsventile (22T, 24T) dazu eingestellt sind, bei einem Druck oberhalb des vorbestimmten Drucks zu öffnen, auf den das Hilfsdruckentlastungsventil (24) zum Öffnen eingestellt ist, und wobei die Mittel (110) zum Erhöhen des Drucks in dem Tank dazu angeordnet sind, den Druck über den für das Hilfsdruckentlastungsventil (24) eingestellten Druck zu erhöhen, und wobei die Mittel (120A) zum Feststellen, ob das mindestens eine Druckentlastungsventil öffnet, dazu angeordnet sind festzustellen, ob das Hauptdruckentlastungsventil öffnet, und dazu angeordnet sind festzustellen, ob das Hilfsdruckentlastungsventil öffnet, und wobei die Mittel (120B) zum Feststellen, bei welchem Druck das mindestens eine Druckentlastungsventil öffnet, falls es öffnet, Mittel (122B) zum Feststellen, bei welchem Druck das Hauptdruckentlastungsventil (22) öffnet, falls es öffnet, und Mittel (124B) zum Feststellen umfassen, bei welchem Druck das Hilfsdruckentlastungsventil (24) öffnet, falls es öffnet, und wobei die Mittel (150) zum Durchführen einer Prüfung der Funktionalität des mindestens einen Druckentlastungsventils Mittel (152) zum Durchführen einer Prüfung der Funktionalität des Hauptdruckentlastungsventils (22) basierend auf der Feststellung umfassen, ob das Hauptdruckentlastungsventil (22) öffnet und, falls das Hauptdruckentlastungsventil (22) öffnet, bei welchem Druck das Hauptdruckentlastungsventil (22) öffnet, und Mittel (154) zum Durchführen einer Prüfung der Funktionalität des Hilfsdruckentlastungsventils basierend auf der Feststellung, ob das Hilfsdruckentlastungsventil (24) öffnet und, falls das Hilfsdruckentlastungsventil (24) öffnet, bei welchem Druck das Hilfsdruckentlastungsventil (24) öffnet.

10. System nach einem der Ansprüche 7 bis 9, bei dem die Mittel (110) zum Erhöhen des Drucks in dem Tank Mittel (110a) zum Steuern des Druckanstiegs solchermaßen umfassen, dass der Druck den für ein temporäres Druckentlastungsventil (22T, 24T) eingestellten Druck nicht übersteigt, um ein Öffnen eines solchen temporären Druckentlastungsventils (22T, 24T) zu vermeiden.

11. System nach einem der Ansprüche 7 bis 10, bei dem die Mittel (110) zum Erhöhen des Drucks in dem Tank (10) Mittel (112) zum Einleiten von komprimiertem Gas in den Tank (10) umfassen.

12. System nach einem der Ansprüche 7 bis 11, bei dem die Mittel (110) zum Erhöhen des Drucks in dem Tank (10) Mittel (114) zum Einleiten von Wärme in den Tank (10) umfassen.

13. Fahrzeug (1), das ein System nach einem der Ansprüche 7 bis 12 enthält.

## Revendications

1. Procédé pour diagnostiquer l'au moins une soupape de surpression d'un système de carburant gazeux liquéfié pour un véhicule (1). ledit système de carburant (A) ayant un réservoir de carburant gazeux liquéfié (10) pour fournir du carburant au moteur du véhicule (1), et au moins une soupape de surpression (22, 24) réglée pour s'ouvrir à une pression prédéterminée pour évacuer le gaz évaporé, **caractérisé par** les étapes de : la connexion (S1) d'une soupape de surpression temporaire (22T, 24T) à ladite au moins une soupape de surpression (22, 24), ladite soupape de surpression temporaire étant réglée pour s'ouvrir à une pression supérieure à ladite pression prédéterminée pour laquelle ladite au moins une soupape de surpression est réglée pour s'ouvrir ; l'augmentation (S2) de la pression dans le réservoir à une pression supérieure à ladite pression établie ; la détermination (S3) si ladite au moins une soupape de surpression s'ouvre (22, 24) ; si ladite au moins une soupape de surpression s'ouvre, déterminer (S4) à quelle pression ladite au moins une soupape de surpression s'ouvre ; et sur la base des déterminations de si ladite au moins une soupape de surpression s'ouvre, et si ladite au moins une soupape de surpression s'ouvre, à quelle pression ladite au moins une soupape de surpression s'ouvre, la réalisation (S5) d'un diagnostic de la fonctionnalité de ladite au moins une soupape de surpression.

2. Procédé selon la revendication 1, comprenant l'étape consistant à déterminer un dysfonctionnement de ladite au moins une soupape de surpression (22, 24) si ladite au moins une soupape de surpression (22, 24) ne s'ouvre pas ou si la pression du réservoir à laquelle la soupape de surpression s'ouvre diffère de plus d'une valeur de pression prédéterminée par rapport à la pression à laquelle l'au moins une soupape de surpression (22, 24) est réglée pour s'ouvrir.

3. Procédé selon la revendication 1, ledit système de combustible gazeux liquéfié (A) comprenant une soupape de surpression primaire (22) réglée pour s'ouvrir à une première pression prédéterminée et une soupape de surpression secondaire (24) réglée pour s'ouvrir à une deuxième pression prédéterminée supérieure à ladite première pression prédéterminée, dans lequel l'étape de connexion d'une soupape de surpression temporaire (22T, 24T) comprend la connexion d'une soupape de surpression temporaire à la fois à la soupape de surpression primaire et à la soupape de surpression secondaire, lesdites soupapes de surpression temporaires (22T, 24T) étant réglées pour s'ouvrir à une pression supérieure à ladite pression prédéterminée pour laquelle ladite soupape de surpression secondaire (24) est réglée pour s'ouvrir, et dans lequel l'étape d'augmentation de la pression dans le réservoir comprend l'augmentation de la pression au-dessus de ladite pression réglée pour la soupape de surpression secondaire (24), et dans lequel l'étape de détermination si ladite au moins une soupape de surpression s'ouvre comprend la détermination si ladite soupape de surpression primaire (22) s'ouvre et la détermination si ladite soupape de surpression secondaire (24) s'ouvre, et dans lequel l'étape de détermination à quelle pression ladite au moins une soupape de surpression s'ouvre, si elle s'ouvre, comprend la détermination de la pression à laquelle ladite soupape de surpression principale (22) s'ouvre, si elle s'ouvre, et déterminer à quelle pression ladite soupape de surpression secondaire (24) s'ouvre, si elle s'ouvre, et dans lequel l'étape d'exécution d'un diagnostic de la fonctionnalité de ladite au moins une soupape de surpression comprend l'exécution d'un diagnostic de la fonctionnalité de ladite soupape de surpression primaire (22) sur la base de la détermination de si ladite soupape de surpression primaire (22) s'ouvre, et si ladite soupape de surpression principale (22) s'ouvre, à quelle pression ladite soupape de surpression principale (22) s'ouvre, et réaliser un diagnostic de la fonctionnalité de ladite soupape de surpression secondaire (24) sur la base de la détermination du fait que ladite soupape de surpression secondaire (24) s'ouvre, et si ladite soupape de surpression secondaire (24) s'ouvre, à quelle pression ladite soupape de surpression secondaire (24) s'ouvre.

4. Procédé selon l'une quelconque des revendications précédentes, dans lequel l'étape d'augmentation de la pression dans le réservoir (10) comprend la commande de ladite augmentation de la pression de telle sorte que la pression ne dépasse pas ladite pression réglée pour une soupape de surpression temporaire (22T, 24T) de façon à éviter l'ouverture de cette soupape de surpression temporaire.

5. Procédé selon l'une quelconque des revendications précédentes, dans lequel l'étape d'augmentation de la pression dans le réservoir (10) comprend l'étape d'introduction de gaz comprimé dans le réservoir.

6. Procédé selon l'une quelconque des revendications précédentes, dans lequel l'étape d'augmentation de la pression dans le réservoir (10) comprend l'étape d'introduction de chaleur dans le réservoir.

7. Système (I) pour diagnostiquer l'au moins une soupape de surpression (22, 24) d'un système de carburant gazeux liquéfié (A) pour un véhicule (1), ledit système de carburant (A) ayant un réservoir de carburant gazeux liquéfié (10) pour fournir du carburant au moteur (E) du véhicule (1), et au moins une soupape de surpression (22, 24) réglée pour s'ouvrir à une pression prédéterminée pour évacuer le gaz évaporé, **caractérisé en ce que** le système (I) comprend une soupape de surpression temporaire (22T, 24T) étant agencée pour être temporairement connectée à ladite au moins une soupape de surpression (22, 24), ladite soupape de surpression temporaire (22T, 24T) étant réglée pour s'ouvrir à une pression supérieure à ladite pression prédéterminée pour laquelle ladite au moins une soupape de surpression (22, 24) est réglé pour s'ouvrir ; des moyens (110) pour augmenter la pression dans le réservoir (10) à une pression supérieure à ladite pression établie ; des moyens (120A) pour déterminer si ladite au moins une soupape de surpression (22, 24) s'ouvre ; des moyens (120B) pour déterminer à quelle pression ladite au moins une soupape de surpression (22, 24) s'ouvre, si ladite au moins une soupape de surpression (22, 24) s'ouvre ; et des moyens (150) pour effectuer un diagnostic de la fonctionnalité de ladite au moins une soupape de surpression (22, 24) sur la base des déterminations de si ladite au moins une soupape de surpression (22, 24) s'ouvre, et si ladite au moins une soupape de surpression (22, 24) s'ouvre, à quelle pression ladite au moins une soupape de surpression (22, 24) s'ouvre.

8. Système selon la revendication 7, comprenant des moyens (160) pour déterminer un dysfonctionnement de ladite au moins une soupape de surpression (22, 24) si ladite au moins une soupape de surpression (22, 24) ne s'ouvre pas ou si la pression du réservoir à laquelle la pression de la soupape de surpression s'ouvre diffère de plus d'une valeur de pression prédéterminée par rapport à la pression à laquelle ladite au moins une soupape de surpression (22, 24) est réglée pour s'ouvrir.

9. Système selon la revendication 7 ou 8, ledit système de combustible gazeux liquéfié (A) comprenant une soupape de surpression primaire (22) réglée pour s'ouvrir à une première pression prédéterminée et une soupape de surpression secondaire (24) réglée pour s'ouvrir à une seconde pression prédéterminée supérieure à ladite première pression prédéterminée, dans lequel une soupape de surpression temporaire (22T, 24T) est agencée pour être temporairement connectée à la fois à la soupape de surpression primaire (22) et à la soupape de surpression secondaire (24), lesdites soupapes de surpression temporaires (22T, 24T) étant réglées pour s'ouvrir à une pression supérieure à ladite pression prédéterminée pour laquelle ladite soupape de surpression secondaire (24) est réglée pour s'ouvrir, et dans lequel les moyens (110) pour augmenter la pression dans le réservoir sont agencés pour augmenter la pression au-dessus de ladite pression réglée pour la soupape de surpression secondaire (24), et dans lequel un moyen (120A) pour déterminer si ladite au moins une soupape de surpression s'ouvre est agencé pour déterminer si ladite soupape de surpression primaire s'ouvre et agencé pour déterminer si ladite soupape de surpression secondaire s'ouvre, et dans lequel les moyens (120B) pour déterminer à quelle pression ladite au moins une soupape de surpression s'ouvre, si elle s'ouvre, comprend des moyens (122B) pour déterminer à quelle pression ladite soupape de surpression primaire (22) s'ouvre, si elle s'ouvre, et des moyens (124B) pour déterminer à quelle pression ladite soupape de surpression secondaire (24) s'ouvre, si elle s'ouvre, et dans lequel ledit moyen (150) pour effectuer un diagnostic de la fonctionnalité de ladite au moins une soupape de surpression comprend un moyen (152) pour effectuer un diagnostic de la fonctionnalité de ladite soupape de surpression primaire (22) sur la base de la détermination du fait que ladite soupape de surpression primaire (22) s'ouvre, et si ladite soupape de surpression principale (22) s'ouvre, à quelle pression ladite soupape de surpression principale (22) s'ouvre, et des moyens (154) pour effectuer un diagnostic de la fonctionnalité de ladite soupape de surpression secondaire sur la base de la détermination de si ladite soupape de surpression secondaire (24) s'ouvre, et si ladite soupape de surpression secondaire (24) s'ouvre, à quelle pression ladite soupape de surpression secondaire (24) s'ouvre.

10. Système selon l'une quelconque des revendications 7 à 9, dans lequel les moyens (110) pour l'augmentation de la pression dans le réservoir comprend les moyens (110a) pour la commande de ladite augmentation de la pression de telle sorte que la pression ne dépasse pas ladite pression réglée pour une soupape de surpression temporaire (22T, 24T) de façon à éviter l'ouverture de cette soupape de surpression temporaire (22T, 24T).

11. Système selon l'une quelconque des revendications 7 à 10, dans lequel les moyens (110) pour l'augmentation de la pression dans le réservoir (10) comprennent des moyens (112) pour introduire du gaz comprimé dans le réservoir (10).

12. Système selon l'une quelconque des revendications 7 à 11, dans lequel les moyens (110) pour l'augmentation de la pression dans le réservoir (10) comprennent des moyens (114) pour introduire la chaleur dans le réservoir (10).

13. Véhicule à moteur (1) comprenant un système selon l'une quelconque des revendications 7 à 12.
